# FASCICULE DE BREVET EUROPEEN

(11) **EP 3 090 872 B1**
(45) Date de publication et mention de la délivrance du brevet: **14.02.2018**
(21) Numéro de dépôt: 16169226.4
(22) Date de dépôt: 02.12.2014
(51) Int. Cl.: B32B 7/06, B32B 7/12, B32B 3/14, B32B 3/18, B32B 3/26

(54) **CALE D'EPAISSEUR D'INTERPOSITION ENTRE LES SURFACES EN REGARD DE DEUX PIECES**
DICKENAUSGLEICHENDER KEIL ZUM EINSCHIEBEN ZWISCHEN ZWEI GEGENÜBERLIEGENDE OBERFLÄCHEN VON ZWEI WERKSTÜCKEN
SPACER TO BE INSERTED BETWEEN THE FACING SURFACES OF TWO PARTS

(30) Priorité: 06.12.2013 FR 1362251
(43) Date de publication de la demande: 09.11.2016
(62) Demande divisionnaire de: 14825400.6
(73) Titulaire: Gastel, Daniel André, 78370 Plaisir les Gatines (FR)
(72) Inventeur: Gastel, Daniel André, 78370 Plaisir les Gatines (FR)
(74) Mandataire: Lefevre-Groboillot, David André

(56) Documents cités:
- EP-A1- 2 329 946
- FR-A1- 2 831 095
- US-A- 4 793 482
- US-A- 5 853 838

## Description

Cale d'épaisseur d'interposition entre les surfaces en regard de deux pièces.

L'invention concerne une Cale d'épaisseur d'interposition entre les surfaces en regard de deux pièces, dont l'écart est variable.

On connait déjà des cales de ce type, qui sont spécifiquement conçues, lors de leur fabrication, en général en métal, pour chaque cas d'application et présentent donc une forme établie une fois pour toute, compatible à l'espace entre les deux pièces.

L'invention a pour but de pallier cet inconvénient.

Pour atteindre ce but, la cale selon l'invention est caractérisée en ce qu'elle comporte une pluralité de sections juxtaposées dans la direction de variation de l'écart, dont au moins certaines sont des sections de cale pelables, formées par l'empilement d'une multitude de feuilles qui adhèrent les unes aux autres par interposition d'une couche d'adhésif.

Selon une caractéristique de l'invention, la cale est caractérisée en ce que deux sections adjacentes sont séparés par une fente pratiquée dans l'épaisseur à partir de la surface supérieure de la cale jusqu'à une profondeur prédéterminée.

Selon une autre caractéristique de l'invention, la cale est caractérisée en ce que les fentes sont adaptées pour permettre la saisie chaque fois de la feuille supérieure de la pile de section délimitée par la fente pour enlever cette feuille.

Selon encore une autre caractéristique de l'invention, la cale est caractérisée en ce que les fentes sont inclinées par rapport à la direction de juxtaposition des sections, selon un angle prédéterminé.

Selon encore une autre caractéristique de l'invention, la cale est caractérisée en ce que l'angle d'inclinaison est compris entre 90 et 30°, de préférence 90 à 45°.

Selon encore une autre caractéristique de l'invention, la cale est caractérisée en ce que les fentes sont effectuées par fraisage.

Selon encore une autre caractéristique de l'invention, la cale est caractérisée en ce que les piles de feuilles des sections sont disposées sur une couche de base commune et en ce que les fentes s'étendent jusqu'à cette couche.

Selon encore une autre caractéristique de l'invention, la cale est caractérisée en ce que les feuilles sont réalisées en un matériau tel que du métal, PET, tissu de verre du carbone.

Selon encore une autre caractéristique de l'invention, la cale est caractérisée en ce que l'adhésif est une colle flexible telle qu'une colle néoprène.

Selon encore une autre caractéristique de l'invention, la cale est caractérisée en ce que les feuilles d'une pile de section ont une épaisseur de l'ordre d'un dixième de millimètre.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue latérale d'une cale de selon l'état de la technique, dont la hauteur varie dans la direction longitudinale ;
- la figure 2 est une vue d'une première version de réalisation d'une cale pelable selon l'invention, avant délitage ;
- la figure 3 est une vue latérale de la cale de la figure 2, délitée pour correspondre à la forme de la cale selon la figure 1 ;
- la figure 4 montre une autre version de réalisation d'une cale selon l'invention à l'état correspondant à la figure 3 ;
- la figure 5 montre une cale selon la figure 4, qui est courbée dans sa direction longitudinale.

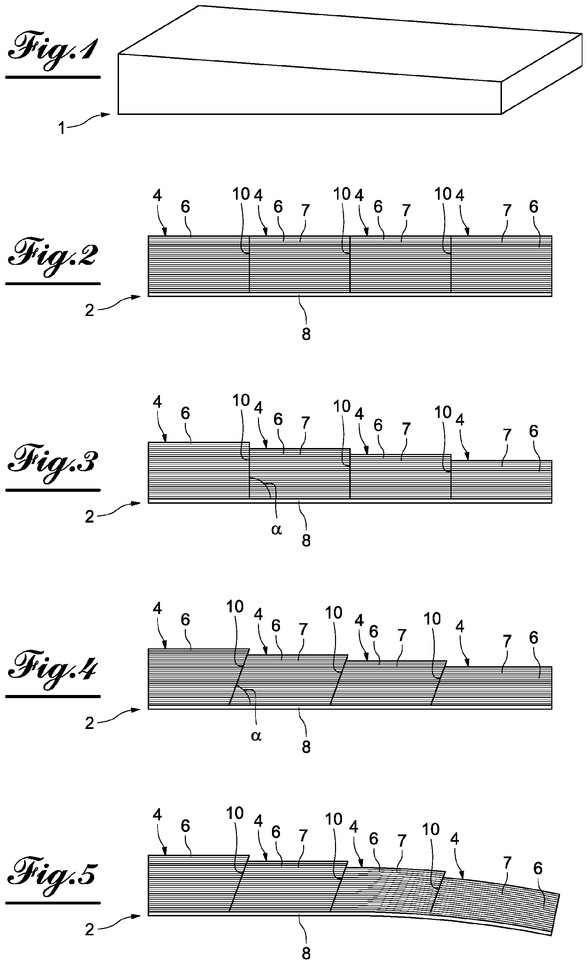

La figure 1 montre une cale 1 de l'état de la technique qui est conçue pour être interposée entre les surfaces en regard de deux pièces, dont l'écart varie progressivement d'une extrémité à l'autre. Cette cale présente donc une épaisseur qui varie progressivement de façon complémentaire dans la direction de sa longueur. La cale a été fabriquée pour cette application spécifique et n'est donc pas utilisable pour d'autres applications.

Les cales d'épaisseur selon l'invention pallient cet inconvénient.

Comme il ressort des figures, leur épaisseur est adaptable à des espaces d'interposition entre des surfaces de deux pièces, dont l'écart varie. A cette fin, une cale selon l'invention notée 2 comprend une pluralité de sections 4 juxtaposée dans la direction longitudinale de la cale et dont chacune constitue une cale pelable formée par l'empilement d'une multitude de feuilles 6 qui adhèrent les unes aux autres par interposition d'une couche d'adhésif 7. Cet adhésif permet de maintenir les feuilles assemblées les unes aux autres tout en assurant un ajustement de la hauteur de l'empilement par délitage d'une ou plusieurs feuilles. Par conséquent, la force de cohésion de deux feuilles adjacentes est supérieure à la valeur de maintien de la pile, mais inférieure à la force de délitage.

Comme on le voit sur les figures, les différentes piles de feuilles 4 sont juxtaposées sur une couche de base continue 8 qui constitue donc la base commune à toutes les piles.

Les différentes piles 6 sont séparées les unes des autres par une fente 10 s'étendant de la surface supérieure des piles jusqu'à la couche de base 8. L'épaisseur de cette fente est avantageusement choisie de façon à permettre la saisie de feuilles pour pouvoir enlever chaque fois la feuille supérieure d'une pile. Cette fente 10 peut être orientée par rapport à la direction longitudinale de la cale selon un angle α comprise entre 90 et 30°, de préférence entre 90 et 45°. Grâce à cette inclinaison une pile peut prendre appui sur la pile adjacente. Concernant l'orientation des fentes dans le sens de la largeur de la cale, elle est avantageusement, mais pas obligatoirement perpendiculaire à la direction longitudinale.

Comme le montre la figure 2, une cale selon l'invention, pourvue de sections individuellement pelables est avantageusement obtenue à partir d'une cale pelable comportant un empilement d'une pluralité de feuilles s'étendant sur toute la longueur de la cale. Les piles individuelles 6 sont ensuite réalisées en faisant des coupes à partir de la surface supérieure de cette cale jusqu'à la couche de base, par exemple par fraisage ou selon tout autre procédé de coupe connu.

Conformément à la figure 5, la cale selon l'invention peut être courbe. A cette fin, il est préférable que les fentes 10 de séparation des piles individuelles 6 soient inclinées dans le sens indiqué par rapport à la couche de base 8. Cette inclinaison présente l'avantage qu'elle part dans le même sens que la courbure.

Concernant les feuilles, elles peuvent être réalisées en tout matériau approprié, par exemple en PET, tissu de verre ou carbone et liées entre elles par toutes colles ou résines, telles que le néoprène, l'époxyde, le cyanate-ester. Les épaisseurs des feuilles correspondront à la précision requise. Elles pourraient par exemple avoir une épaisseur d'un dixième de millimètre.

Bien entendu des multiples modifications peuvent être apportées à l'invention telle que décrite et représentée sur les figures. Dans l'exemple qui vient d'être décrit, les piles sont juxtaposées dans le sens longitudinal de la cale. On pourrait aussi prévoir des piles juxtaposées dans le sens de la largeur. Ces piles seraient alors séparées par des fentes orientées en conséquence. L'invention couvre bien entendu aussi des cales comportant des piles juxtaposées dans le sens de la longueur et de la largeur.

## Revendications

1. Méthode de fabrication d'une cale d'épaisseur à hauteur ajustable pour interposition entre des surfaces en regard de deux pièces dont l'écart est variable au moins dans une direction de variation de l'écart, **caractérisée en ce que** la méthode comprend une étape de coupe d'un empilement pelable de feuilles, à partir d'une surface supérieure de l'empilement dans l'épaisseur de l'empilement, en sorte de former une pluralité de sections de cale séparées par des fentes et juxtaposées au moins dans une direction pour variation de l'écart.

2. Méthode de fabrication d'une cale selon la revendication 1, **caractérisée en ce que** les fentes (10) sont adaptées pour permettre la saisie chaque fois de la feuille supérieure de la pile de section délimitée par la fente pour enlever ladite feuille supérieure.

3. Méthode de fabrication d'une cale selon la revendication 1 ou la revendication 2, **caractérisée en ce que** les fentes (10) sont inclinées par rapport à ladite direction pour variation de l'écart.

4. Méthode de fabrication d'une cale selon la revendication 3, **caractérisée en ce que** les fentes (10) sont inclinées par rapport à ladite direction pour variation de l'écart d'un angle d'inclinaison (α) compris entre 90 et 30°, de préférence 90 à 45°.

5. Méthode de fabrication d'une cale selon l'une des revendications 1 à 4, **caractérisée en ce que** les fentes sont faites par fraisage.

6. Méthode de fabrication d'une cale selon l'une des revendications 1 à 5, **caractérisée en ce que** les feuilles (6) sont disposées sur une couche de base (8) et **en ce que** l'étape de coupe est effectuée ensuite et jusqu'à la couche de base (8)pour former les fentes (10).

7. Méthode de fabrication d'une cale selon l'une des revendications 1 à 6, **caractérisée en ce que** les feuilles (6) sont en un matériau tel que du métal, PET, tissu de verre ou carbone.

8. Méthode de fabrication d'une cale selon l'une des revendications 1 à 7, **caractérisée en ce que** les feuilles (6) ont une épaisseur de l'ordre d'un dixième de millimètre.

9. Cale d'épaisseur obtenue selon le procédé de l'une des revendications 1 à 8.

## Patentansprüche

1. Herstellungsmethode eines dickenausgleichenden Keils mit einstellbarer Höhe zum Einschieben zwischen gegenüberliegenden Flächen von zwei Werkstücken, deren Abstand mindestens in einer Abstandsänderungsrichtung variabel ist, **dadurch gekennzeichnet, dass** die Methode einen Schneideschritt eines zwecks Variation des Abstands abziehbaren Stapels von Folien ab einer oberen Fläche des Stapels in die Dicke des Stapels umfasst, um eine Vielzahl von Keilabschnitten zu bilden, die durch Schlitze getrennt und in mindestens einer Richtung aneinandergereiht sind.

2. Herstellungsmethode eines Keils nach Anspruch 1, **dadurch gekennzeichnet, dass** die Schlitze (10) ausgebildet sind, um jedes Mal das Ergreifen der oberen Folie des Stapels des von dem Schlitz begrenzten Abschnitts zu erlauben, um die obere Folie abzuziehen.

3. Herstellungsmethode eines Keils nach Anspruch 1 oder Anspruch 2, **dadurch gekennzeichnet, dass** die Schlitze (10) in Bezug zu der Abstandsvariationsrichtung geneigt sind.

4. Herstellungsmethode eines Keils nach Anspruch 3, **dadurch gekennzeichnet, dass** die Schlitze (10) in Bezug zu der Abstandsvariationsrichtung in einem Neigungswinkel (α) zwischen 90 und 30°, vorzugsweise 90 bis 45°, inklusive geneigt sind.

5. Herstellungsmethode eines Keils nach einem der Ansprüche 1 bis 4, **dadurch gekennzeichnet, dass** die Schlitze gefräst sind.

6. Herstellungsmethode eines Keils nach einem der Ansprüche 1 bis 5, **dadurch gekennzeichnet, dass** die Folien (6) auf einer Basisschicht (8) angeordnet sind und dass der Schneideschritt danach und bis zu der Basisschicht (8) durchgeführt wird, um die Schlitze (10) zu bilden.

7. Herstellungsmethode eines Keils nach einem der Ansprüche 1 bis 6, **dadurch gekennzeichnet, dass** die Folien (6) aus einem Material wie Metall, PET, Glasgewebe oder Karbon sind.

8. Herstellungsmethode eines Keils nach einem der Ansprüche 1 bis 7, **dadurch gekennzeichnet, dass** die Folien (6) eine Dicke von zirka einem Zehntel Millimeter haben.

9. Dickenausgleichender Keil, erhalten gemäß dem Verfahren nach einem der Ansprüche 1 bis 8.

## Claims

1. A method for manufacturing a spacer with an adjustable height for insertion between the facing surfaces of two parts, the separation of which is variable at least in a variation direction of the separation, **characterized in that** the method comprises a step for cutting a peelable stack of sheets, from an upper surface of the stack in the thickness of the stack, so as to form a plurality of spacer sections separated by slits and juxtaposed at least in a direction for varying the separation.

2. The method for manufacturing a spacer according to claim 1, **characterized in that** the slits (10) are suitable for allowing the grasping each time of the upper sheet of the section stack delimited by the slit to remove said upper sheet.

3. The method for manufacturing a spacer according to claim 1 or claim 2, **characterized in that** the slits (10) are inclined relative to said direction for varying the separation.

4. The method for manufacturing a spacer according to claim 3, **characterized in that** the slits (10) are inclined relative to said direction for varying the separation by an incline angle (a) comprised between 90 and 30°, preferably 90 to 45°.

5. The method for manufacturing a spacer according to one of claims 1 to 4, **characterized in that** the slits are made by milling.

6. The method for manufacturing a spacer according to one of claims 1 to 5, **characterized in that** the sheets (6) are positioned on a base layer (8) and **in that** the cutting step is carried out next and up to the base layer (8) to form the slits (10) .

7. The method for manufacturing a spacer according to one of claims 1 to 6, **characterized in that** the sheets (6) are made from a material such as metal, PET, glass cloth or carbon.

8. The method for manufacturing a spacer according to one of claims 1 to 7, **characterized in that** the sheets (6) have a thickness of about a tenth of a millimeter.

9. A spacer obtained according to the method of one of claims 1 to 8.
